# EUROPEAN PATENT SPECIFICATION

(11) **EP 4 731 410 B1**
(45) Date of publication and mention of the grant of the patent: **21.10.2026**
(21) Application number: 25737568.3
(22) Date of filing: 24.06.2025
(51) Int. Cl.: B29C 45/37, B29C 45/73, B23K 26/36, B29C 33/06, B29C 33/38, B29C 37/00, B29K 21/00

(54) **METHOD FOR OBTAINING A FLOCKED TEXTURED SURFACE BY MOLDING AN ELASTOMERIC THERMOPLASTIC MATERIAL**
VERFAHREN ZUR HERSTELLUNG EINER BEFLOCKTEN STRUKTURIERTEN OBERFLÄCHE DURCH FORMEN EINES ELASTOMEREN THERMOPLASTISCHEN MATERIALS
PROCÉDÉ D'OBTENTION D'UNE SURFACE TEXTURÉE FLOQUÉE PAR MOULAGE D'UN MATÉRIAU THERMOPLASTIQUE ÉLASTOMÈRE

(30) Priority: 24.06.2024 FR 2406789
(43) Date of publication of application: 29.04.2026
(73) Proprietor: Roctool, 73370 Le Bourget-du-Lac (FR); FEMTOLUTIONS, S.L., 08205 Sabadell Barcelona (ES)
(72) Inventor: BOULANGER, Mathieu, 73100 Tresserve (FR); GARCÍA BLÁZQUEZ, Raúl, 08021 Barcelona Barcelona (ES)
(74) Representative: Hamann, Jean-Christophe
(86) International application number: PCT/EP2025/067619
(87) International publication number: WO 2026/002913

(56) References cited:
- WO-A1-01/05572
- WO-A2-03/055660
- WO-A2-2010/085052
- DE-A1- 19 731 315
- ES-A1- 2 701 764
- US-A1- 2012 227 879

## Description

### Technical Field

The invention belongs to the field of thermoplastic polymer materials implemented by molding, in particular by injection molding and more particularly to elastomeric thermoplastic polymers.

The invention is more particularly intended for obtaining surface textures, such as flocking, directly during molding, where the texture is integral with the material making the surface underlying the texture.

### Background Art

Flocking is a technique consisting of covering a surface with textile fibers. This coverage is usually achieved by adding and bonding fibers to the surface.

However, some methods, such as described in document EP 2 483 088, make it possible to obtain a flocking on an elastomer surface, directly from molding, with substantially conical strands extending from this surface, with a height comprised between 0.1 mm and 0.2 mm and a strand density comprised between 5 and 15 strands per mm².

Obtaining such a flocking effect upon molding, includes texturing walls of a part of a mold, where the texture is desired, by engraving.

Such a recessed texture, in particular in a metallic mold, may be obtained by laser engraving of the walls.

Thus, the surface of interest may be exposed to the pulses of a laser beam with a diameter of a few tens of micrometers. The material impacted by the laser sublimates, leaving a microcavity with a surface area comprised between 0.001mm² and 0.01mm² depending on the power and on the diameter of the laser beam as well as on the duration of the pulse.

However, this technology of the prior art has limitations.

Indeed, the depth of laser engraving, even with multiple strokes as described in EP 2 483 088, may hardly reach engraving depths greater than 0.5 mm. From a practical point of view it is considered that such a depth is limited to 0.9 mm.

Such an engraving depth is obtained at the expense of the strand density and moreover, even if the engraving is carried out at depths of this magnitude, the filling of these patterns during molding is far from reaching 100%, so that the strands obtained on the surface of the actual part will only have part of this height.

### SUMMARY OF THE INVENTION

A method for making a flocked surface by molding an elastomeric thermoplastic material, aims at solving the shortcomings of prior art and may comprise steps of:
performing a first engraving of a molding surface of a mold cavity so as to make a plurality of tapered microcavities according to a density of microcavities, each tapered microcavity of the plurality comprising microcavity inner walls extending according to an engraving depth;
performing a second engraving of the molding surface of the mold cavity so as to affect a roughness of the microcavity inner walls according to a recessed pattern in counterdraft relative to a direction from a microcavity bottom to a microcavity entry;
preheating the molding surface of the mold cavity and the microcavities inner walls;
injecting, at an injection temperature Ti, a thermoplastic elastomer into the mold cavity,
the elastomeric thermoplastic material contacting the molding surface comprising the plurality of tapered microcavities preheated to the preheating temperature and wherein the preheating temperature is comprised within 0.5.Ti ± 20 °C;
cooling down the mold cavity to a demolding temperature; and
demolding by stretching strands of the elastomeric thermoplastic material enclosed in the plurality of tapered microcavities and hold in the tapered microcavities by the recessed pattern in counterdraft.

Thus, preheating to a suitable temperature at least the walls of the mold comprising engraved tapered microcavities, enables the tapered microcavities to be filled with the polymer during the introduction of the thermoplastic elastomer into the mold cavity.

The relative holding effect of the strands into the tapered microcavities by the patterns in counterdraft, causes the strands to stretch during demolding, enabling to lengthen the strands, the lengths of the strands on the demolded part being greater than the initial engraving depth.

Thus, by a precise control of the preheating and of the demolding temperatures, the method makes it possible to produce a flocked surface with strands of material having a greater height than the technological limits imposed by the maximum engraving depth for a given strand thickness. The above works whatever the engraving method.

The method may be implemented according to the embodiments and variants exposed hereafter, which are to be considered individually or according to any technically operative combination.

The method may comprise, prior to the injecting step, a vacuum drawing the mold cavity.

The preheating of the molding surface comprising the plurality of tapered microcavities may be carried out by induction heating.

The first engraving step or the second engraving step may be performed by laser technologies.

The flocked elastomeric thermoplastic material surface may comprise, after demolding, strands of material with a height greater than the engraving depth. This effect results from the stretching of the strands during demolding while the elastomeric thermoplastic material is in an elastoplastic state.

The height of the material strands may be at least 20% higher than the engraving depth.

According to variants, a base of a tapered microcavity can be selected among circular, elliptical, crescent-shaped and polygonal.

According to some embodiments the polygonal base may be star-shaped.

The method enables to make a part made of an elastomeric thermoplastic material comprising a flocked textured surface, the flocked textured surface comprising a plurality of protruding strands, in a single material piece with an underlying material surface, with a strand density comprised between 1 and 15 strands per mm², a strand height *h* of strand protrusion greater than 1 mm for a strand diameter *d* at mid-height such as *h*/*d* > *6.*

In some embodiment the strand density may be comprised between 1 and 8 strands per mm^{2.}

### Brief description of the drawings

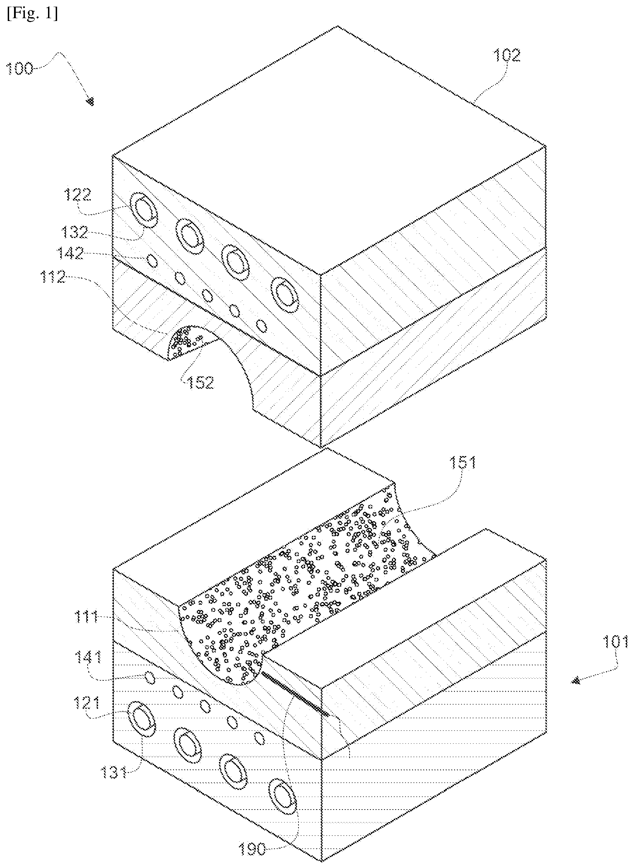

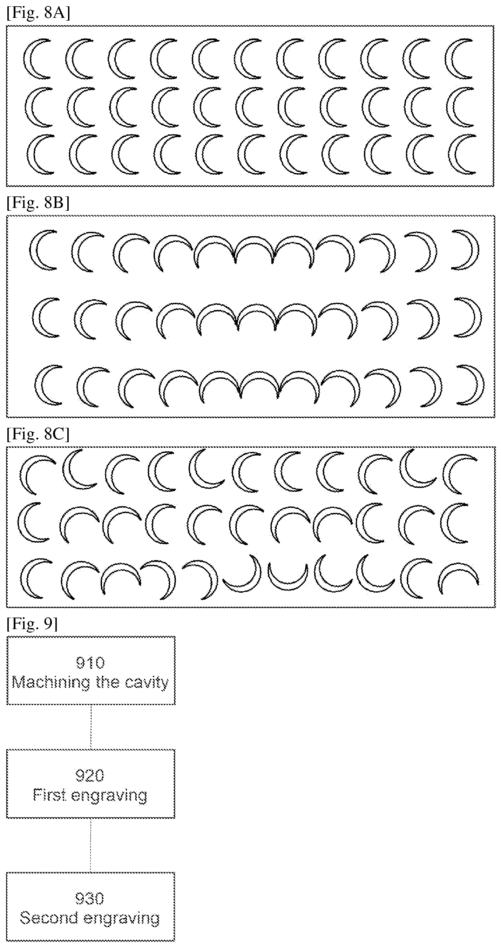

The method may be implemented according to the nonlimiting embodiments exposed hereafter with reference to [Fig.1] to [Fig.9] in which:
**Fig.1**
   [Fig.1] shows, in a partial perspective and sectional view an exemplary embodiment of a portion of a mold adapted to an implementation of the method;
**Fig.2**

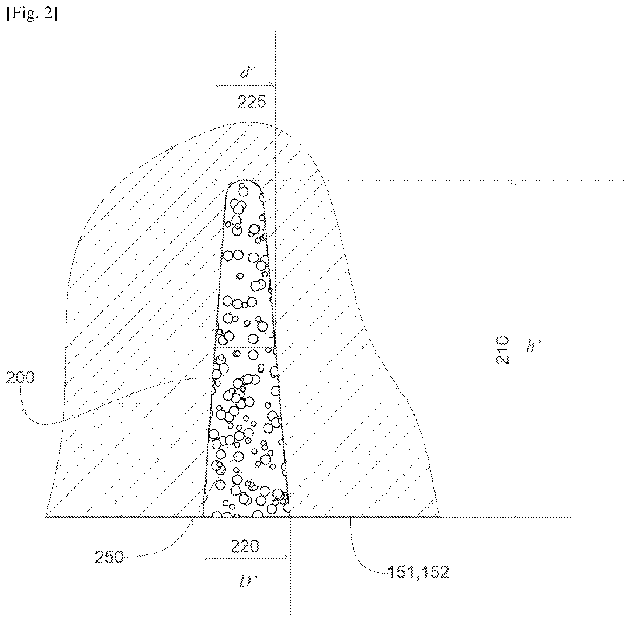

   [Fig.2] represents a detailed cross-sectional view of a tapered microcavity made on a molding surface of the mold shown [Fig.1] ;
**Fig.3**

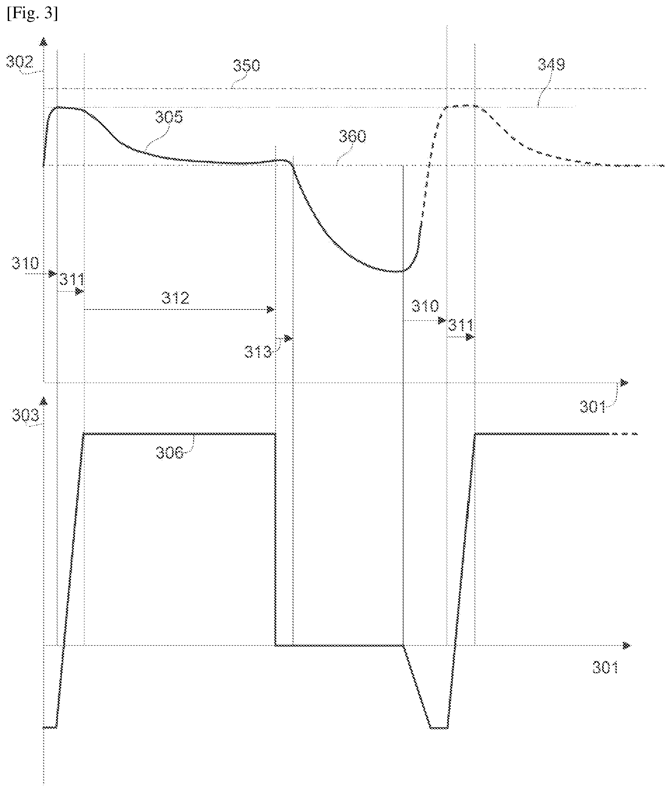

   [Fig.3] represents examples of time - molding surface temperature, and time - pressure in the mold cavity diagrams during a molding operation;
**Fig.4**

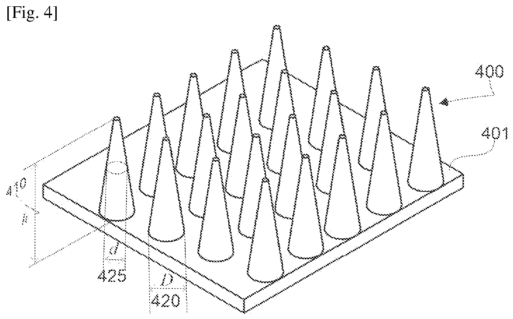

   [Fig.4] represents, according to perspective view, an example of a flocked textured surface;
**Fig.5**

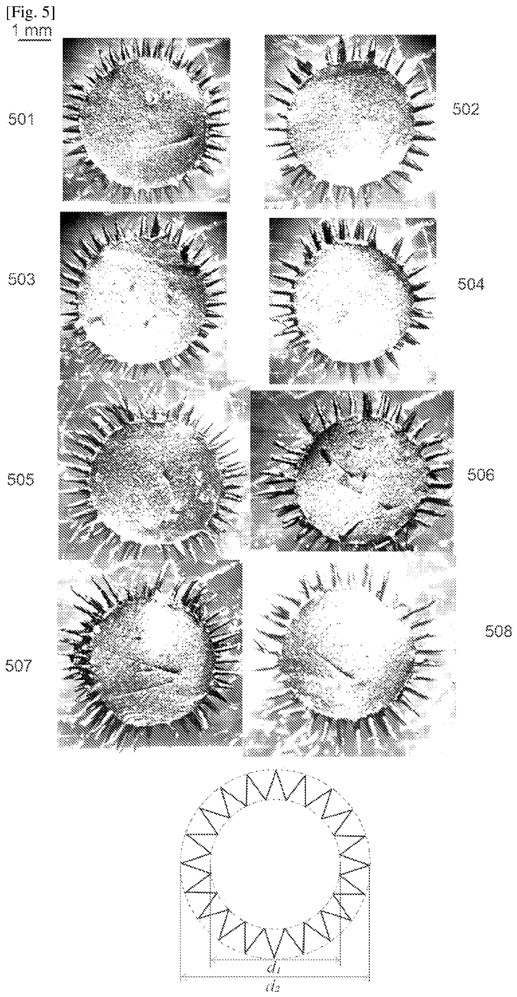

   [Fig.5] shows micrographs of test samples corresponding to the conditions indicated in [Table.2];
**Fig.6**

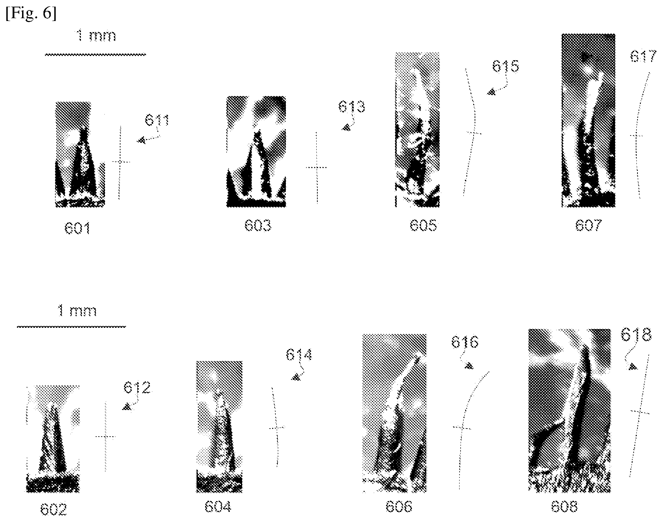

   [Fig.6] shows micrographs of strands corresponding to the conditions indicated in [Table.2];
**Fig.7**

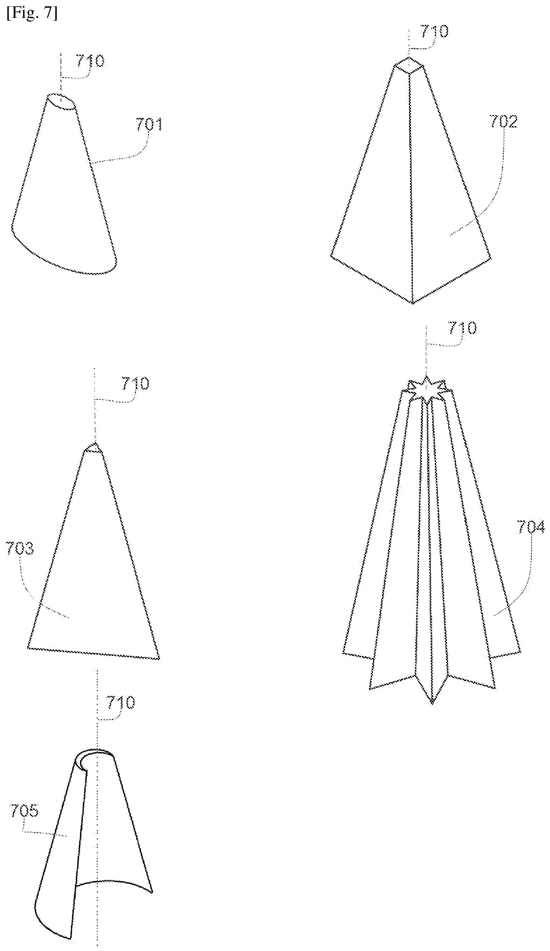

   [Fig.7] shows, in perspective views, examples of strand shapes;
**Fig.8A**
   [Fig.8A] shows a top view of an exemplary embodiment of a flocked surface comprising strands with a crescent-shaped cross-section oriented in a same way over the entire flocked surface;
**Fig.8B**
   [Fig.8B] shows a top view of an exemplary embodiment of a flocked surface comprising strands with a crescent-shaped cross-section, oriented in a repetitive pattern over the entire flocked surface;
**Fig.8C**
   [Fig.8C] shows a top view of an exemplary embodiment of a flocked surface comprising strands with a crescent-shaped cross-section, randomly oriented over the entire flocked surface; and
**Fig.9**
   [Fig.9] is a flowchart of the mold cavity preparation steps.

### Description of Embodiments

[Fig.1] , according to a non-limiting example of implementation, the method may be used to obtain, by molding, a substantially circular cross-section part.

The method is, however, adapted for obtaining a small or a large size flocked surface, flat or shaped, of a developable or non-developable shape.

Such a part may be obtained by plastic injection molding, in a mold comprising multiple molding cavities, thus enabling to make as many parts as molding cavities in a single injection cycle. Thus, enabling mass production.

A molding cavity defines a sealed closed volume filled by a molded material when injecting the material into the closed mold.

According to an exemplary embodiment, the mold (100) may comprise two shells (101, 102), the molding cavity being split into two half-cavities (111, 112) between these two shells (101, 102), so that when the mold is closed, i.e. the two shells (101, 102) are brought together and hold against each other, the two half-cavities delimiting the sealed closed volume.

The half-cavities (111, 112) are preferably made of a metallic material. The remainder of the two shells of the mold may be made of the same material as the two half-cavities or of another material, metallic or non-metallic, according to various embodiments.

The mold may comprise more than two shells, sliding splitmolds as well as other implementations known in injection molding an adapted for obtaining the part.

[Fig.9] in a machining step (910) the mold cavities are machined for obtaining the overall shape of the molding surfaces. Such a machining may be performed by conventional cutting, like milling, by electro-discharge machining or combination thereof, optionally followed by polishing.

In a first engraving step (920) the molding surfaces thus machined, where a flocking is sought, are engraved so as to create the microcavities at a desired depth.

In a second engraving step (930) the engraved molding surfaces where a flocking is sought, are subjected to a second engraving in order to create a counterdraft pattern on the walls of the microcavities obtained during the first engraving steps.

The first and the second engraving steps may be performed by different technologies. Laser technologies are flexible in the shape of the microcavities and provide tight control over the first and the second engraving.

The mold may comprise heating and cooling means in order to control both a preheating temperature and a demolding temperature. Various heat and cool technologies may be considered such as resistance heating, hot oil or water vapor circulation, combined with water circulation for cooling. Yet, as shown later, induction heating offers many advantages such as a refined control of the temperature of the molding surface, more specifically the textured surfaces of the mold.

To this end, the mold (100) may comprise an induction heating device comprising inductors (121, 122) extending into ducts (131, 132) formed in at least one of the two shells (101, 102).

The inductors (121, 122) may, for example, be made of multi-strand copper cables, such as Litz cables, or of copper tubes, without these examples being limiting, and may be powered by an alternating electric current at a frequency comprised between 10 kHz and 100 kHz.

The mold may also comprise a cooling circuit, for a circulation of a liquid or gaseous heat transfer fluid, such as water, oil, air, nitrogen, helium or any suitable mixture.

According to exemplary embodiments, the heat transfer fluid may circulate in specific cooling ducts (141, 142) or in the same ducts (131, 132) as the inductors, in a space comprised between the inductors (121, 122) and the internal walls of the ducts (131, 132).

According to some alternative embodiments, the molding cavities (111, 112) may be made of a ferromagnetic material so that an electric current flowing in the inductors produces the heating of these cavities by induction, the rest of the shells may be made of a material transparent to magnetic fields such as a ceramic.

The molding cavities may also be made of a non-ferromagnetic metallic material of high thermal conductivity, and, either the remainder of the shell in which the ducts (131, 132) are carved may be made of a ferromagnetic material, or, a shell is made of a non-ferromagnetic material with a high thermal conductivity, and inner walls of the ducts are coated with a layer of a ferromagnetic material.

By way of non-limiting examples, a non-ferromagnetic material suitable for the molding surface and the rest of the mold may be selected among copper and its alloys, aluminum and its alloys or an austenitic stainless steel.

At least a portion of a molding surface (151, 152) may comprise an engraving-type machining enabling the making of the flocked texture.

### [Fig.9] each mold cavity

According to exemplary embodiments, such an engraving may be obtained by chemical photo-etching, by electro discharge machining, by shot-blasting or micro-shot-blasting, by machining or by laser engraving.

[Fig.2] , according to an exemplary embodiment the texture engraved in the molding surface comprises a plurality of tapered microcavities (200), with a microcavity depth *h'* (210) an entry diameter D' (210) and a half-height diameter D' (225).

By way of example, h' (210) is typically comprised between 0.75 mm and 0.9 mm, but may be smaller depending on the application; the entry diameter D' (220) is typically comprised between 0.15 mm and 0.3 mm but may also be smaller depending on the applications; with 1 to 15 tapered microcavities per mm² of molding surface, preferably 1 to 8 microcavities per mm², and a ratio *h'*/*d'* which may be higher than 6, though the method also enable to etch microcavities with an aspect ratio lower than 6.

For instance, tapered microcavities (200) may be obtained by a first laser engraving, by means of a nano or femto pulse laser etching device, of adapted power, in one or multiple strokes for each tapered microcavity.

During a second laser engraving, also by means of a nano or femto pulse laser engraving device, but at a reduced engraving power, an internal engraving of the tapered microcavity (200) creates a counterdraft recessed pattern (250) on the inner walls of the tapered microcavity (200). This recessed pattern (250) is shown schematically [Fig.2] and may provide the technical effect that a solid material filling the tapered microcavity (200) and the anfractuosities created on the surface of it by the pattern in counterdraft (250), made during the second engraving, could not be extracted from the microcavity.

As a non-limiting example, the depth of the pattern in counterdraft (250), created by the second engraving, may be comprised between 1µm and 20µm, with a cup-shape having a diameter of the same order of magnitude but may also take other shapes like a hollow pyramid, depending on the settings of the second engraving operation.

The corresponding total roughness Rz on the inner walls of the tapered microcavity, which may be measured, for example, by laser profilometry on soft replica impression, is of the order of 10 micrometers.

Rz is defined by ISO 4287 standard as a roughness parameter that measures the average difference between the five highest peaks and the five deepest valleys of a surface's texture, calculated over a specified evaluation length.

When the engraving is carried out by laser pulse etching technology, it may be carried out in two steps comprising a first engraving producing the tapered microcavities and a second engraving aimed at producing the surface finish patterns on the inner walls of these tapered microcavities.

Depending on the engraving technology used, a similar result or a result enabling a same technical effect may also be obtained by a single engraving operation or with more than two engraving operations.

The elastomeric thermoplastic material may be a copolymer or a mixture of polymers of the TPE (Thermoplastic Elastomer), TPU (Thermoplastic Polyurethane), TPR (Thermoplastic Rubber) types, suitable for plastic injection molding with a hardness comprised between 2 and 45 Shore A, preferentially between 10 and 40 Shore A.

[Fig.3] , the induction heating and the cooling means implemented in the mold, make it possible to set a precise and reproducible appropriate thermal cycle during the molding of the elastomeric thermoplastic material.

As this elastomeric thermoplastic is a copolymer or a mixture of polymers, a melting temperature of the elastomer generally corresponds to a temperature range in which the elastomer has a viscosity adapted for its injection molding, such temperature range extends over approximately 20°C and is recommended by the supplier of the material.

Thus, in a time (301) - temperature of the molding surfaces (302) diagram, the thermal cycle (305) comprises a preheating (310) of the molding surfaces, the mold being closed, up to a preheating temperature (349) lower than a temperature (350) of the thermoplastic elastomer leaving the injection screw, called the injection temperature, which is generally close to a melting temperature of the thermoplastic elastomer. This preheating may be carried out by means of the inductors.

The preheating of the mold aims to facilitate the filling of it and mainly meets two functions: a macroscopic even filling of the mold cavity and a tight reproduction of the textures engraved on the walls comprising the tapered microcavities.

A preheating level adapted to an even filling of the cavity is all the closer to the recommended injection temperature of the elastomer as the cavity comprises thin zones with a small space between the molding walls, so that the elastomer remains as fluid as possible.

A preheating level adapted to the reproduction of the textures should preserve a certain viscosity of the elastomer and is therefore more remote and lower from the recommended injection temperature.

Said differently, if the preheating temperature is too low, the injected material may not correctly fill the microcavities, and if the preheating temperature is too high the material filling the microcavities will not correctly grip in the second engraving pattern,

As a starting point, the preheating temperature of the mold is set to 0.5 .Ti ± 20°C where Ti is the injection temperature (350) of the elastomer before it enters the mold, a temperature that is recommended for the injection molding of the material by its supplier, and which is generally close to the melting temperature of the elastomeric thermoplastic. This preheating temperature may then be refined by preliminary tests before starting mass production.

By way of example, for a TPE having a melting temperature of 190 °C, the preheating temperature of the mold may be selected between 105 °C and 115 °C.

During an injection step, the elastomeric thermoplastic is injected into the mold. Molding surfaces, including those comprising engraved textures, being preheated, the elastomer has a viscosity suitable for filling tapered microcavities and their patterns in counterdraft, under the effect of the injection pressure, i.e. the viscosity of the injected material should be low enough to properly fill the microcavities, but high enough to avoid the formation of burrs, hence the choice of a preheating temperature lower than the melting/injection temperature of the thermoplastic elastomer.

A controlled cooling phase (312), by a circulation of a heat transfer fluid, possibly combined with heating, by the action of the inducers, enables to bring the molding surfaces to a demolding temperature (360) corresponding to a solidified but elastoplastic state of the elastomeric thermoplastic.

The demolding temperature (360) may be higher than a glass transition temperature of the elastomeric thermoplastic material and is such that, mechanically stressed at this temperature, the elastomeric thermoplastic responds with a solid deformation in predominantly amorphous phase.

During a demolding step (313), the mold is opened, and the part is demolded while the molded material is in this elastoplastic state.

The heating means may be operated during this phase in combination or not with the cooling means, to keep the molding surfaces at this demolding temperature (360), corresponding to an elastoplastic state of the material, during the opening of the mold and the demolding.

Using induction heating combined with cooling means enables both a rapid cooling, thus freezing the strands in the microcavities, while still controlling the demolding temperature.

With the mold open and the part demolded, the molding surfaces may cool down before the mold may be once again closed and the cycle resumes.

The part being demolded while the elastomeric thermoplastic is in an elastoplastic state, the molded material being hold in the tapered microcavities, the flocked portions of the part can only be extracted therefrom by stretching and causing elongation and constriction of the strands hold in the tapered microcavities.

The demolding temperature (360) is thus selected so that the elastomeric thermoplastic is elastic enough so that the strands can be extracted from the tapered microcavities without breaking, but sufficiently plastic so the strands keep a permanent elongation and constriction after cooling the part to ambient.

Such demolding temperature is, for example, determined by flexure or tensile viscoanalyzis tests in temperature, and refined, as necessary, by preliminary molding tests.

Thus, the induction heating means make it possible to control and to rapidly modify the temperature of the molding surfaces so as to ensure the filling of the tapered microcavities during injection molding, then the stretching of the strands upon demolding, in cycle times compatible with mass production.

With the aim of a precise and reproducible control of the temperatures of the molding surfaces by the combined action of induction heating and cooling means, [Fig.1] , the mold may comprise one or more means for measuring the temperature in the vicinity of the molding surfaces, for example in the form of one or more thermocouples (190) distributed in the mold. Thus, the heating and cooling means are servocontrolled according to set-point temperatures and the measurement delivered by these thermocouples (190).

The set-point temperatures may be determined by a prior thermal simulation of the molding operation and then be refined by preliminary tests.

According to some embodiment, in a time (301) - pressure in the mold (303) diagram, the pressure cycle (306) may comprise a vacuum drawing of the molding cavity once the mold is closed, during the preheating (310) of the molding surfaces and before the injection of the thermoplastic elastomer.

Such a preliminary vacuum draw further improves the filling of the tapered microcavities during the injection (311).

[Fig.4] , the flocked textured surface may comprise a plurality of substantially conical strands (400) extending in protrusion at a height *h* (410), with a diameter at their base D (420), and a diameter at mid-height *d* (425).

The conical strands (400) are integral and in material continuity with an underlying surface (401), the strands being made during the same molding operation as the underlying surface (401).

[Fig.4] , the underlying surface (401) is here shown planar but those skilled in the art understand that it may take any other shape compatible with a molding operation.

The strands obtained by the method exhibit a height *h* (410) greater than 0.75 mm and typically greater than 1 mm. As shown by examples below, approximately 70% or less of the final height *h* of the strands is related to the reproduction of the tapered microcavities of the mold, filled by the molded material during the injection of the elastomer, while 10% to 50% of the final height *h* of the strands, which comes in addition to the molded height, is obtained by an elastoplastic stretching effect during demolding.

Thus, the height *h* (410) of the conical strands (400) of the flocked textured surface is greater than the engraved depth (210, [Fig.2] ) of the tapered microcavities of the molding surface.

Upon stretching, during demolding, the strands undergo a constriction over almost their entire height, so that the diameter *D* (420) of the strands at their base is less than the entry diameter (220 [Fig.2] ) of the tapered microcavities of the mold.

The stretching effect upon demolding makes it possible to obtain a ratio *h*/*d* of the conical strands (400), where *d* (425) is the diameter of the conical strand at mid-height, greater than the ratio *h'*/*d'* of the tapered microcavities and more particularly a *h*/*d* ratio greater than 6.

### Examples

### Effect of surface treatment of tapered microcavities

Injection molding tests of an elastomeric thermoplastic are carried out on cylinders with a 4 mm diameter with different flocking textures of the molding surfaces.

The elastomeric thermoplastic is of the TPE type with a melting temperature of 190°C.

The molding conditions are as follows:
Temperature Ti=190°C ± 10°C, preheating of the mold 110°C ±5°C
Prior to injection, the molding surface is preheated, and the molding cavity is evacuated.

The demolding temperature is 45°C±5°C.

Strand heights *h* are measured on micrographs.

The tests are carried out with two textures corresponding to different tapered microcavities patterns, and according to 3 surface treatments during the second laser engraving of the tapered microcavities.

Texture 1: Microcavity depth ( *h' ,* 210): 0.8 mm; entry diameter ( *D'* , 220): 0.24 mm, cavity pitch (*p ,* 430): 0.24 mm.

Texture 2: Microcavity depth ( *h' ,* 210): 0.9 mm; entry diameter ( *D'* , 220): 0.24 mm, cavity pitch (*p ,* 430): 0.30 mm.

Surface treatments TS0: without second engraving, TS1: second engraving with a laser engraving power at 20% of the power of the first engraving, TS2: second engraving with a laser engraving power at 30% of the power of the first engraving, i.e. a more powerful laser engraving power than for TS1.

Thus, conditions TS1 and TS2 correspond to a method implementation comprising a second engraving, whereas TS0 corresponds to the prior art (without second engraving).

[Table.1] gives the maximum strand height measured on the analyzed molded surface:

**[Table 1]**

| Texture | Surface treatment | *h* | Height gain | Constriction at the base |
|---|---|---|---|---|
| Texture 1: | TS0 | 0.8 mm | 0% | Not measurable |
| | TS1 | 1.25 mm | +56 %' | 8 % |
| | TS2 | 0.9 mm | +12.5 % | Not measurable |
| Texture 2: | TS0 | 0.9 mm | 0% | Not measurable |
| | TS1 | 1.30 mm | +44 % | 16 % |
| | TS2 | 1.10 mm | +33 % | 16 % |

Thus, [Table.1] shows the effect of the second engraving on the ability to make longer and slimmer strands with such a method. More particularly, the second surface treatment (TS1) allows, during demolding, to lengthen the strands (height *h* ) in large proportions, greater than 50% in some cases, mainly by a stretching effect of the strands as evidenced by the appearance of a constriction at the base of the strand.

### Effect of molding conditions.

The tests with textures 1 and 2 are carried out according to 4 conditions: with or without vacuum drawing of the molding cavity (V1, V0 respectively), with or without preheating of the molding surface *(C1,* C0 respectively) before injection.

The results are given in [Table.2] with reference to [Fig.5] for texture 1 cross sections (501, 503, 505, 507), and texture 2 cross sections (502, 504, 506, 508). The height *h* in this table gives the difference between the diameter of the core corresponding to the underlying surface ( *d ₁*), i.e. a diameter of 4 mm, and the outer diameter ( *d ₂*) of the flocked surface at the top of the strands, so that, in [Table.2], the strand height *h* is assessed by *h=*(*d ₂ -d ₁* )/*2.*

**[Table 2]**

| Texture | Molding conditions | Heighth |
|---|---|---|
| Texture 1: | V0 C0 (501) | 0.75 mm |
| | V1 C0 (503) | 0.8 mm |
| | V0 C1 (505) | 1 mm |
| | V1 C1 (507) | 1.10 mm |
| Texture 2: | V0 C0 (502) | 0.65 mm |
| | V1 C0 (504) | 0.7 mm |
| | V0 C1 (506) | 1 mm |
| | V1 C1 (508) | 1 mm |

[Fig.6] , a more detailed observation, on strands obtained with an engraving corresponding to texture 1 (601, 603, 605, 607) and on strands obtained with an engraving corresponding to texture 2 (602, 604, 606, 608) enables to assess a ratio *h*/*d* obtained for the different preheating conditions C0, C1 and vacuum drawing conditions V0, V1.

The height *h* is determined by the length of the mean profile curve described by the strand and the diameter *d* is determined by the width (diameter) of the strand, perpendicular to the mean profile at mid-curve.

The working-drawing of the construction used for each case (611, 612, 613, 614, 615, 616, 617, 618) is given next to each micrograph.

The results are given in the following table:

**[Table 3]**

| Texture | Molding conditions | *h*/*d* ratio |
|---|---|---|
| Texture 1: | V0 C0 (601) | 4.1 |
| | V1 C0 (603) | 3.6 |
| | V1 C1 (605) | 8.5 |
| | V1 C1 (607) | 9.9 |
| Texture 2: | V0 C0 (602) | 3.6 |
| | V1 C0 (604) | 4.9 |
| | V1 C1 (606) | 6.45 |
| | V1 C1 (608) | 6.45 |

Examples from [Table.1] to [Table.3] show that the elongation of the strands beyond 0.9 mm and with a slenderness *h*/*d* greater than 6, may be obtained by the stretching effect of the strands during demolding, that is, by implementing the method.

For the stretching effect to occur, the results tend to show that the tapered microcavities and patterns made during the second engraving should be correctly filled by the injected material. The molding parameter that influences the most such filling is the preheating of the molding surfaces.

The preheating of the molding surfaces leads to heating / cooling cycles of said surfaces, these cycles, as well as the concentration of the heating energy on the molding surfaces, are achievable under mass production conditions, by the use of induction heating.

Without preheating the molding surfaces, even by evacuating the molding cavity, the engraved tapered microcavities on the molding surfaces are not properly filled by the injected material and the stretching effect barely occurs.

Therefore, the result is obtained by a synergy between the engraving of the molding surfaces and the induction heating of the molding surfaces.

The tapered microcavities and consequently the strands protruding from the flocked surface, as shown in [Fig.7] , may take different shapes, for example conical with an elliptical base (701), pyramidal with a square base (702), pyramidal with a triangular base (703) or more generally polygonal, convex or star-shaped (704) or with a crescent-shape cross-section (705). The corresponding microcavities have the same cross-section shape but may be of a lower slenderness ratio, i.e. less deep and/or with a larger entry diameter, than the corresponding strands.

The star-shaped strand is shown as a regular star with equal star branches. The star-shaped cross-section may however be irregular with uneven star branches.

The obtainable strand density depends on the shape and the cross section of the strands and is comprised between 1 and 15 strands per mm².

For instance, the strand density may be 1 strand per mm² for a star-shaped (704) strand but may reach higher densities for bristle like conical strands. For most products the strand density may be comprised between 1 and 8 strands per mm².

The examples show flocked surfaces with a unique type of strand cross section and height; however, the method may be used to make a flocked surface combining strands of different cross sections and different heights.

[Fig.8A] , [Fig.8B] and [Fig.8C] when the cross-section of the tapered microcavities do not exhibit a circular symmetry, the strands may be oriented around a central axis of symmetry (710) all in the same way [Fig.8A] , according to a defined and repetitive pattern [Fig.8B] or randomly [Fig.8C] .

### Effect of the demold ing temperature

To achieve the desired stretching effect during demolding, the material should be at such a temperature that it exhibits an elastoplastic behavior during the demolding of the part,

If the demolding temperature is too high, the material is extracted from the cavities by local plasticization from the patterns in counterdraft on the walls of the microcavities and the strands are not stretched. If the demolding temperature is too low, the strands are extracted from the microcavities by elastic deformation without producing a permanent stretching of the strands.

The test conditions are given in [Table.4] for a elastomeric thermoplastic of the TPE type with a melting temperature of 190°C.

For all tests, the engraving depth *h'* is 0.9 mm

**[Table 4]**

| Test conditions | Preheating temperature [°C] | Demolding temperature [° C] |
|---|---|---|
| A | 115 | 55 |
| B | 105 | 35 |
| C | 110 | 35 |
| D | 114 | 35 |
| E | 110 | 45 |

[Table.5] gives the average height of strands *h* , assessed over 30 strands, obtained by these different test conditions and for different strand geometries and orientation thereof.

**[Table 5]**

| Shape | Star (704) | | Triangle (703) | | Crescent-Shape (705) | |
|---|---|---|---|---|---|---|
| Distribution | O | A | O | A | O | A |
| A | 1.10 mm | 1 mm | 1.10 mm | 1 mm | | |
| B | 0.9 mm | 1 mm | 0.9 mm | 0.8 mm | 0.9 mm | 1.10 mm |
| C | 0.9 mm | 1.10 mm | 1.10 mm | 1.10 mm | 1.2 mm | 0.9 mm |
| D | 1.30 mm | 1.2 mm | 1.2 mm | 1.2 mm | 1.2 mm | 1.2 mm |
| E | 1.3 mm | 1.30 mm | 1.4 mm | 1.2 mm | 1.10 mm | 1.2 mm |

With condition 'O': all strands oriented in the same direction, condition 'A' : strands oriented randomly.

These results show that for a given flocking there may be an optimal combination of the preheating temperature and of the demolding temperature. These conditions may be determined by preliminary tests before running the serial production.

Induction heating of the mold, combined with temperature measurement during the process, the design of the mold and its heating-cooling system implementing thermal simulations, make it possible to ensure precise control and reproducibility of these temperatures in production.

## Claims

1. A method for molding a flocked surface made of an elastomeric thermoplastic material contacting a mold cavity, comprising steps of:
performing a first engraving (920) of a molding surface (151, 152) of the mold cavity (111, 112) so as to make a plurality of tapered microcavities (200), each tapered microcavity comprising inner walls extending according to an engraving depth (210);
performing a second engraving (930) of the molding surface (151, 152) so as to affect a roughness of the inner walls of the plurality of tapered microcavities and making a recessed pattern (250) in counterdraft relative to a direction going from a bottom of a tapered microcavity (200) to an entry of the tapered microcavity;
preheating (310) the molding surface of the mold cavity and the inner walls of the plurality of tapered microcavities to a preheating temperature (349) lower than an injection temperature Ti;
injecting (311) the elastomeric thermoplastic material at the injection temperature Ti into the mold cavity, the elastomeric thermoplastic material contacting the molding surface comprising the plurality of tapered microcavities preheated to the preheating temperature and and wherein the preheating temperature is comprised within 0.5.Ti ± 20 °C;
cooling down (312) the mold cavity to a demolding temperature (360); and
demolding (313) the flocked surface by stretching strands of the elastomeric thermoplastic material enclosed in the plurality of tapered microcavities and hold in the plurality of tapered microcavities by the recessed pattern in counterdraft.

2. The method of claim 1, comprising, prior to injecting the elastomeric thermoplastic material, evacuating the mold cavity.

3. The method of claim 1, wherein preheating of the molding surface comprising the inner walls of the plurality of tapered microcavities is performed by induction.

4. The method of claim 1, wherein the demolding temperature (360) is less than the preheating temperature (349) but greater than a glass transition temperature of the elastomeric thermoplastic material, the demolding temperature being selected so that the elastomeric thermoplastic material is in an elastoplastic state.

5. The method of claim 1, wherein the first engraving (920) and the second engraving (930) are performed by laser technologies.

6. The method of claim 1, wherein the flocked surface comprises protruding strands (400), a height (410) of the protruding strands being greater than the engraving depth (210).

7. The method of claim 6, wherein the height (410) of the protruding strands is at least 20% higher than the engraving depth (210).

8. The method of claim 1, wherein a base of a tapered microcavity is selected among: circular, elliptical, crescent-shape and polygonal.

9. The method of claim 8, wherein a polygonal base is star-shaped.

10. The method of claim 6, wherein a strand density is comprised between 1 and 15 strands per mm², a protruding strand height *h* (410) being greater than 1 mm and a protruding strand diameter *d* (425) at mid-height being such that *h*/*d* > *6.*

11. The method of claim 10, wherein the strand density is comprised between 1 and 8 strands per mm².

## Patentansprüche

1. Verfahren zum Formen einer beflockten Oberfläche aus einem elastomeren thermoplastischen Material, das mit einem Formhohlraum in Kontakt steht, mit den folgenden Schritten:
Durchführen einer ersten Gravur (920) einer Formfläche (151, 152) des Formhohlraums (111, 112), um eine Vielzahl von sich verjüngenden Mikrohohlräumen (200) zu erzeugen, wobei jeder sich verjüngende Mikrohohlraum Innenwände aufweist, die sich entsprechend einer Gravurtiefe (210) erstrecken;
Durchführung einer zweiten Gravur (930) der Formfläche (151, 152), um die Rauheit der Innenwände der Vielzahl konischer Mikrohohlräume zu beeinflussen und ein vertieftes Muster (250) in Gegenrichtung zu einer Richtung zu erzeugen, die von einem Boden eines konischen Mikrohohlraums (200) zu einem Eingang des konischen Mikrohohlraums verläuft;
Vorheizen (310) der Formfläche des Formhohlraums und der Innenwände der Vielzahl von konischen Mikrohohlräumen auf eine Vorheiztemperatur (349), die niedriger ist als eine Einspritztemperatur Ti;
Einspritzen (311) des elastomeren thermoplastischen Materials bei der Einspritztemperatur Ti in den Formhohlraum, wobei das elastomere thermoplastische Material mit der Formfläche in Kontakt kommt, die die Vielzahl der auf die Vorheiztemperatur vorgeheizten, sich verjüngenden Mikrohohlräume umfasst, und wobei die Vorheiztemperatur innerhalb von 0,5·Ti ± 20 °C liegt;
Abkühlen (312) des Formhohlraums auf eine Entformungstemperatur (360); und
Entformen (313) der beflockten Oberfläche durch Dehnen von Strängen des elastomeren thermoplastischen Materials, die in der Vielzahl von sich verjüngenden Mikrohohlräumen eingeschlossen sind und durch das vertiefte Muster in den sich verjüngenden Mikrohohlräumen gegen den Zug gehalten werden.

2. Verfahren nach Anspruch 1, wobei vor dem Einspritzen des elastomeren thermoplastischen Materials der Formhohlraum evakuiert wird.

3. Verfahren nach Anspruch 1, wobei das Vorheizen der Formfläche, die die Innenwände der Vielzahl von sich verjüngenden Mikrohohlräumen umfasst, durch Induktion erfolgt.

4. Verfahren nach Anspruch 1, wobei die Entformungstemperatur (360) niedriger ist als die Vorheiztemperatur (349), jedoch höher als eine Glasübergangstemperatur des elastomeren thermoplastischen Materials, wobei die Entformungstemperatur so gewählt wird, dass sich das elastomere thermoplastische Material in einem elastoplastischen Zustand befindet.

5. Verfahren nach Anspruch 1, wobei die erste Gravur (920) und die zweite Gravur (930) mittels Lasertechnologien durchgeführt werden.

6. Verfahren nach Anspruch 1, wobei die beflockte Oberfläche hervorstehende Stränge (400) umfasst, wobei eine Höhe (410) der hervorstehenden Stränge größer ist als die Gravurtiefe (210).

7. Verfahren nach Anspruch 6, wobei die Höhe (410) der hervorstehenden Stränge mindestens 20 % größer ist als die Gravurtiefe (210).

8. Verfahren nach Anspruch 1, wobei eine Grundform eines sich verjüngenden Mikrohohlraums ausgewählt wird aus: kreisförmig, elliptisch, sichelförmig und polygonal.

9. Verfahren nach Anspruch 8, wobei eine polygonale Grundform sternförmig ist.

10. Verfahren nach Anspruch 6, wobei die Strangdichte zwischen 1 und 15 Strängen pro ^{mm²} liegt, wobei eine Höhe *h* (410) der hervorstehenden Stränge größer als 1 mm ist und ein Durchmesser *d* (425) der hervorstehenden Stränge in der Mitte der Höhe so bemessen ist, dass *h*/*d > 6 gilt.*

11. Verfahren nach Anspruch 10, wobei die Strangdichte zwischen 1 und 8 Strängen pro mm² liegt.

## Revendications

1. Procédé pour le moulage d'une surface floquée constituée d'un matériau thermoplastique élastomère en contact avec une cavité d'un moule, comprenant des étapes de :
effectuer une première gravure (920) d'une surface de moulage (151, 152) de la cavité du moule (111, 112) de manière à réaliser une pluralité de microcavités coniques (200), chaque microcavité conique comprenant des parois internes s'étendant selon une profondeur de gravure (210) ;
effectuer une deuxième gravure (930) de la surface de moulage (151, 152) de manière à affecter une rugosité de parois internes de la pluralité de microcavités coniques et réaliser un motif en en creux (250) en contre-dépouille par rapport à une direction allant d'un fond d'une microcavité conique (200) à une entrée de microcavité conique ;
préchauffer (310) la surface de moulage de la cavité du moule et des parois intérieures de la pluralité de microcavités coniques à une température de préchauffage (349) inférieure à une température d'injection Ti ;
injection (311) le matériau thermoplastique élastomère à la température d'injection Ti dans la cavité du moule, le matériau thermoplastique élastomère étant en contact avec la surface de moulage comprenant la pluralité de microcavités coniques préchauffées à la température de préchauffage et dans laquelle la temperature de préchauffage est comprise dans une plage de 0,5.Ti ± 20 °C ;
refroidir (312) la cavité du moule à une température de démoulage (360) ; et
démouler (313) la surface floquée en étirant des brins du matériau thermoplastique élastomère enfermé dans la pluralité de microcavités coniques et maintenu dans la pluralité de microcavités coniques par le motif en creux en contre-dépouille.

2. Procédé selon la revendication 1, comprenant, avant d'injecter le matériau thermoplastique élastomère, un tirage au vide de la cavité du moule.

3. Procédé selon la revendication 1, dans lequel le préchauffage de la surface de moulage comprenant les parois internes de la pluralité de microcavités coniques est effectué par induction.

4. Procédé selon la revendication 1, dans lequel la température de démoulage (360) est inférieure à la température de préchauffage (349) mais supérieure à une température de transition vitreuse du matériau thermoplastique élastomère, la température de démoulage étant sélectionnée de sorte que le matériau thermoplastique élastomère soit dans un état élastoplastique.

5. Procédé selon la revendication 1, dans lequel la première gravure (920) et la deuxième gravure (930) sont réalisées par des technologies laser.

6. Procédé selon la revendication 1, dans lequel la surface floquée comprend des brins saillants (400), une hauteur (410) des brins saillants étant supérieure à la profondeur de gravure (210).

7. Procédé selon la revendication 6, dans lequel la hauteur (410) des brins saillants est supérieure d'au moins 20 % à la profondeur de gravure (210).

8. Procédé selon la revendication 1, dans lequel une base d'une microcavité conique est sélectionnée parmi : circulaire, elliptique, en forme de croissant et polygonale.

9. Procédé selon la revendication 8, dans lequel une base polygonale est en forme d'étoile.

10. Procédé selon la revendication 6, dans lequel une densité de brins est comprise entre 1 et 15 brins par mm², une hauteur de brin saillant *h* (410) étant supérieure à 1 mm et un diamètre de brin saillant *d* (425) à mi-hauteur étant tel que *h*/*d > 6.*

11. Procédé selon la revendication 10, dans lequel la densité de brins est comprise entre 1 et 8 brins par mm².
